**Europäisches Patentamt**

**European Patent Office**

**Office européen des brevets**

(19)

(11) Veröffentlichungsnummer: **0 187 983**
**B1**

(12) # EUROPÄISCHE PATENTSCHRIFT

(45) Veröffentlichungstag der Patentschrift:
**29.11.89**

(51) Int. Cl.⁴: **H 02 H 9/04**

(21) Anmeldenummer: **85116242.0**

(22) Anmeldetag: **19.12.85**

(54) Filterschaltung mit ZnO-Ueberspannungsableitern.

(30) Priorität: **15.01.85 CH 176/85**

(43) Veröffentlichungstag der Anmeldung:
**23.07.86 Patentblatt 86/30**

(45) Bekanntmachung des Hinweises auf die Patenterteilung:
**29.11.89 Patentblatt 89/48**

(84) Benannte Vertragsstaaten:
**AT CH DE FR GB LI SE**

(56) Entgegenhaltungen:
**US-A- 3 711 794**
**US-A- 3 824 431**
**US-A- 4 021 759**
**US-A- 4 021 760**
**US-A- 4 198 613**

**DEHN & SÖHNE, DRUCKSCHRIFT, Nr. 492/82, 1982,
Blatt 8, Neumarkt, DE; "4.2 BEE-Schutz Netz 63A"**

(73) Patentinhaber: **BBC Brown Boveri AG, Haselstrasse,
CH-5401 Baden (CH)**

(72) Erfinder: **Ari, Niyazi, Dr., Landstrasse 154,
CH-5415 Nussbaumen (CH)**
Erfinder: **Hansen, Diethard, Dr., Bahnhofstrasse 39,
CH-8956 Berikon (CH)**
Erfinder: **Holtink, Hendrik, Dorfstrasse 4,
CH-5200 Windisch (CH)**
Erfinder: **Schär, Hans, Dr., Solothurnerstrasse 4,
CH-4053 Basel (CH)**

# Beschreibung

Die Erfindung betrifft eine Filterschaltung mit Zinkoxid-Überspannungsableitern gemäss dem Oberbegriff des Anspruchs 1.

Üblicherweise werden Zinkoxid-Überspannungsableiter (ZnO-Überspannungsableiter), die auch als Zinkoxid-Varistoren (ZnO-Varistoren) bezeichnet werden, als spannungsbegrenzende Elemente in elektrischen Schaltungen verwendet.

In dieser Funktion sind sie beispielsweise auch aus dem für 1984 gültigen Verkaufskatalog der Firma H. Schaffner Industrieelektronik GmbH, Theodor-Rehbock-Str. 5, D-7500 Karlsruhe bekannt. Auf Seite 59 dieses Katalogs ist eine mit FN 35 2Z-10/03 bezeichnete Filterschaltung für ein aus einem Phasenleiter, einem Nulleiter und einem Schutzleiter bestehendes elektrisches Wechselspannungsnetz dargestellt. In dieser Schaltung sind die Zinkoxid-Überspannungsableiter parallel zu sogenannten X-Kondensatoren mit Kapazitäten im µF-Bereich (hier 0,22 µF) zwischen den Phasenleiter und den Nulleiter geschaltet. Sie dienen dazu, Überspannungen, die durch eine Gegentaktstörung zwischen Phasenleiter und Nullleiter auftreten, zu begrenzen. Gegen Überspannungen, die durch eine Gleichtaktstörung zwischen dem Phasenleiter und dem Schutzleiter bzw. dem Nulleiter und dem Schutzleiter auftreten, bietet die bekannte Schaltung keinen Schutz, da zwischen diesen Leitern keine Überspannungsableiter vorgesehen sind. Ein solcher zusätzlicher Überspannungsschutz ist aber im Hinblick auf NEMP- bzw. EMV-Anwendungen (NEMP = Nuklearer Elektromagnetischer Puls; EMV = Elektromagnetische Verträglichkeit) erforderlich. Bei der bekannten Schaltung sind lediglich zur Transientenfilterung sogenannte Y-Kondensatoren vorhanden. Diese weisen aus Gründen des Berührungsschutzes (vgl. VDE-Norm 700 oder 875) gegenüber den X-Kondensatoren nur Kapazitäten im nF-Bereich (hier 15 nF) auf. Diese Filterschaltung benötigt vergleichsweise viel Platz, da sie aus einzelnen Bauelementen aufgebaut ist.

Aus der US-PS 3 824 431 ist zudem bekannt, dass Zinkoxid-Überspannungsableiter unterhalb ihrer Ansprechspannung Kapazitäten in Filterschaltungen ersetzen können. Die Ausführungsbeispiele zeigen die Zinkoxid-Überspannungsableiter als separate Schaltungselemente der Filterschaltungen. Mit derartigen Anordnungen sind einem raumsparenden Aufbau der jeweiligen Filterschaltung Grenzen gesetzt.

Die Erfindung, wie sie in den Ansprüchen gekennzeichnet ist, löst die Aufgabe, eine Filterschaltung mit Zinkoxid-Überspannungsableitern zu schaffen, welche einfach herzustellen ist und die vergleichsweise wenig Raum beansprucht.

Zinkoxid-Überspannungsableiter verhalten sich bei Spannungen unterhalb ihrer Ansprechspannung, bei der sie leitfähig werden, im wesentlichen wie Kondensatoren. Je nach Material und Bauform weisen die «ZnO-Kondensatoren» Kapazitäten von typisch 1 nF auf. Als obere noch sinnvoll zu realisierende Kapazitätsgrenze können 100 nF angenommen werden.

Die durch die Erfindung erreichten Vorteile sind im wesentlichen darin zu sehen, dass für den Überspannungsschutz von Filterschaltungen, die Kondensatoren mit Kapazitäten im nF-Bereich enthalten, keine zusätzlichen Bauteile erforderlich sind, sondern vorhandene Kondensatoren einfach durch Zinkoxid-Überspannungsableiter ersetzt werden können. Solche «ZnO-Kondensatoren» sind bis zu hohen Spannungen belastbar. Mit zunehmender Spannung nimmt der Verlustwinkel zu, was beispielsweise für die Anwendung in Filterschaltungen besonders günstig ist. Auch sind Zinkoxid-Überspannungsableiter recht kostengünstige Bauteile. Durch Einbetten von anderen Schaltungselementen, insbesondere Induktivitäten, in Zinkoxid-Überspannungsableitermaterial, erreicht man extrem kurze Verbindungsleitungen, was in vorteilhafter Weise die Effektivität eines aus Filterschaltungen aufgebauten NEMP-Schutzes erhöht. Auch bei Filterschaltungen zur Erhöhung der EMV wirken sich besonders kompakte Schaltungsanordnungen vorteilhaft aus.

Im folgenden werden Ausführungsbeispiele der Erfindung anhand der Zeichnung erläutert.

Es zeigt:

Fig. 1 ein Schaltbild einer Filterschaltung mit Zinkoxid-Überspannungsableitern und

Fig. 2 ein Schnittbild eines Zinkoxid-Blocks (ZnO-Block) mit eingebetteten Filterelementen.

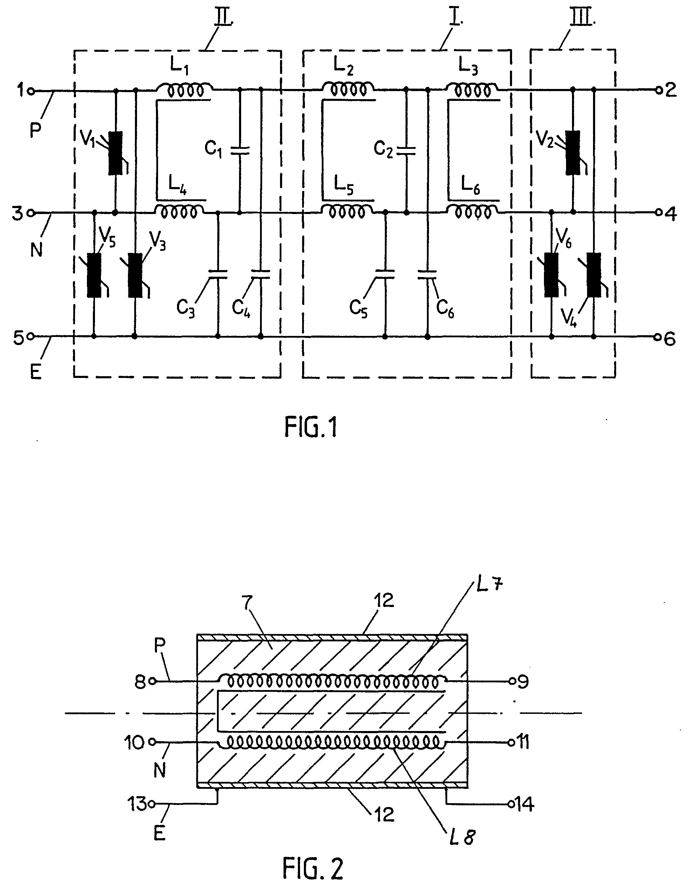

Die Filterschaltung nach Fig. 1 stellt ein Entstörfilter mit Überspannungsschutz für ein aus einem Phasenleiter P, einem Nulleiter N und einem Schutzleiter E bestehendes elektrisches Wechselspannungsnetz dar.

Die Filterschaltung weist für den Phasenleiter P eine netzseitige Anschlussklemme 1 und eine verbraucherseitige Anschlussklemme 2, für den Nullleiter N eine netzseitige Anschlussklemme 3 und verbraucherseitige Anschlussklemme 4 und für den Schutzleiter E eine netzseitige Anschlussklemme 5 und eine verbraucherseitige Anschlussklemme 6 auf.

Zwischen die Anschlussklemmen 1 und 2 des Phasenleiters P sind in Serie Drosseln L1, L2 und L3 geschaltet und zwischen die Anschlussklemmen 3 und 4 des Nulleiters N entsprechend Drosseln L4, L5 und L6. Die Drosseln L1 und L4, L2 und L5 bzw. L3 und L6 sind stromkompensierte Drosseln, d.h. sie sind um einen gemeinsamen ferromagnetischen Kern gewickelt.

Zwischen den Phasenleiter P und den Nulleiter N sind zwei sogenannte X-Kondensatoren C1 und C2 geschaltet. Der X-Kondensator C1 ist am Phasenleiter P zwischen den Drosseln L1 und L2 und am Nulleiter zwischen den Drosseln L4 und L5 angeschlossen. Der X-Kondensator C2 ist am Phasenleiter P zwischen den Drosseln L2 und L3 und am Nulleiter N zwischen den Drosseln L5 und L6 angeschlossen.

Zwischen Phasenleiter P und Schutzleiter E sowie zwischen Nulleiter N und Schutzleiter E sind vier sogenannte Y-Kondensatoren C3 bis C6 vorgesehen. Die Y-Kondensatoren C3 und C4 sind, wie der X-Kondensator C1, am Phasenleiter P zwischen den Drosseln L1 und L2 und die Y-Kondensatoren C5 und C6, wie der X-Kondensator C2, am Phasenleiter P zwischen den Drosseln L2 und L3 angeschlossen.

Nächst den netzseitigen und verbraucherseitigen Anschlussklemmen 1, 3 bzw. 2, 4 sind zwischen den Phasenleiter P und den Nulleiter N ZnO-Überspannungsableiter V1 und V2, zwischen den Phasenleiter P und den Schutzleiter E ZnO-Überspannungsableiter V3 und V4 und zwischen den Nulleiter N und den Schutzleiter E ZnO-Überspannungsableiter V5 und V6 geschaltet.

Bei einer Wechselspannung von 220 V mit einer Frequenz von 50 Hz und einer Auslegung der Filterschaltung für einen Strom von 6 A können die einzelnen Bauteile zur Erzielung einer guten Breitband-Filterwirkung wie folgt dimensioniert werden:

| | | |
|---|---|---|
| L1, L4 | : | 1 mH |
| L2, L3, L5, L6 | : | 0,8 mH |
| C1 | : | 0,3 μF |
| C2 | : | 33 nF |
| C3, C4 | : | 1 nF |
| C5, C6 | : | 2,2 nF |

Als ZnO-Überspannungsableiter können solche der Baureihe BOV gemäss der Druckschrift Nr. D HS 102 480 DEF, Ausgabe 3/80 der BBC AG Brown, Boveri und Cie., D-6800 Mannheim insbesondere Typ-Nr. BOV-250 S20K verwendet werden. Diese weisen unterhalb ihrer Ansprechspannung eine Kapazität von ca. 1 nF auf.

Verwendet im Sinne der Erfindung, d.h. als direkter Ersatz für Kapazitäten als auch zur Spannungsbegrenzung, sind in der beschriebenen Filterspannung die ZnO-Überspannungsleiter V4 bis V6. Diese wirken unterhalb ihrer Ansprechspannung als weitere Y-Kondensatoren neben den Y-Kondensatoren C3 bis C6. So bildet beispielsweise der ZnO-Überspannungsableiter V3 zusammen mit dem Y-Kondensator C4 und der Drossel L1 im Phasenleiter P ein sogenanntes Y-Glied mit Tiefpasswirkung. Entsprechend die ZnO-Überspannungsableiter V4 mit C6 und L3, V5 mit C3 und L4 sowie V6 mit C5 und L6. Erreicht die Spannung zwischen dem Phasenleiter P und dem Schutzleiter E oder dem Nulleiter N und dem Schutzleiter E, z.B. aufgrund einer netz- oder verbraucherseitig einlaufenden Störung, die Ansprechspannung den ZnO-Überspannungsableiter V3 bis V6, so gehen diese in einen gut leitenden Zustand über und begrenzen die Spannung auf ihrem Ansprechniveau. Die ZnO-Überspannungsableiter V3 bis V6 können daher als Multifunktionelemente bezeichnet werden.

Nicht im Sinne der Erfindung als Multifunktionselemente verwendet sind die ZnO-Überspannungsableiter V1 und V2, da diese mit ihrer lediglich im nF-Bereich liegenden Kapazität die X-Kondensatoren C1 und C2 mit Kapazitäten im uF-Bereich nicht ersetzen können und neben ihnen betragsmässig auch nicht ins Gewicht fallen.

Die Funktion der ZnO-Überspannungsableiter V1 und V2 beschränkt sich daher in der beschriebenen Schaltung, wie auch in der eingangs gewürdigten, aus dem Katalog der Fa. Schaffner bekannten Schaltung, auf ihre Ableiterwirkung für Überspannungen zwischen dem Phasenleiter P und dem Nulleiter N.

Sollten für bestimmte Anwendungsfälle X-Kondensatoren mit Kapazitäten bis etwa 100 nF ausreichen, so können diese selbstverständlich durch ZnO-Überspannungsableiter ersetzt werden.

Auch könnten in der beschriebenen Filterschaltung die Y-Kondensatoren C3 bis C6 durch ZnO-Überspannungsableiter ersetzt werden. Dass dies im Beispielsfall nicht geschehen ist, hat seinen Grund einmal darin, dass es für einen ausreichenden Überspannungsschutz genügt, die nächst den Anschlussklemmen angeordneten Y-Kondensatoren durch ZnO-Überspannungsableiter zu ersetzen. Andererseits soll dargestellt werden, wie sich in einfacher Weise unter Verwendung handelsüblicher Hochfrequenzfilter ohne Überspannungsschutz, Filterschaltungen mit Überspannungsschutz aufbauen lassen.

So ist beispielsweise die in Fig. 1 umrahmte und mit I bezeichnete Bauteilgruppe mit den Elementen L2, L3, L5, L6, C2, C5 und C6 ein handelsübliches, in ein geschlossenes Gehäuse eingebautes Hochfrequenzfilter der Fa. Schaffner Elektronik AG, CH-4708 Luterbach, welches mittels der Bauteilgruppen II (Elemente L1, L4, C3, C4, V1, V3, V5) und III (Elemente V2, V4, V6) in seiner Filterwirkung verbessert und um den Überspannungsschutz ergänzt ist.

Dass sowohl netzseitig vor, als auch verbraucherseitig hinter dem Hochfrequenzfilter (Bauteil I) Überspannungsableiter vorgesehen sind, hat seinen Grund darin, sowohl netzseitig als auch verbraucherseitig verursachte Überspannungen zu begrenzen und insbesondere vom Hochfrequenzfilter fern zu halten.

Fig. 2 zeigt ein Ausführungsbeispiel dafür, wie sich die Erfindung in räumlich konstruktiver Hinsicht bei einer wieder für ein Wechselspannungsnetz aus Phasenleiter P, Nulleiter N und Schutzleiter E vorgesehenen Filterschaltung optimal anwenden lässt.

Dargestellt ist im Schnitt ein z.B. zylindrischer Block 7 aus ZnO-Material in welchem Drosseln L7, L8, speziell um einen gemeinsamen Kern gewickelte Eisendrosseln, gegenseitig berührungsfrei eingebettet sind. Die Drosseln L7 und L8 sind der Einfachheit halber nicht mit ihrer wirklichen geometrischen Form, zondern mit ihren elektrischen Schaltsymbolen in Fig. 2 eingezeichnet. Die Anschlüsse der Drosseln L7, L8 sind aus dem ZnO-Block 7 herausgeführt auf Klemmen 8, 9 für den Phasenleiter P bzw. Klemmen 10, 11 für den Nulleiter N. Der ZnO-Block 7 ist aussen mit einer leitenden Schicht 12 versehen, welche mit Klemmen 13 und 14 für den Schutzleiter E verbunden ist.

Innerhalb des ZnO-Blocks 7 sind die Drosseln L7 und L8 für Spannungen zwischen den einzelnen Leitern P, N und E unterhalb der Ansprechspannung des ZnO-Materials gegeneinander sowie gegenüber der leitenden Schicht 12 isoliert und weisen deshalb auch gegeneinander eine gewisse verteilte X-Kapazität und gegenüber der leitenden Schicht 12 eine verteilte Y-Kapazität auf. Die Grösse dieser Kapazitäten hängt ab von den konkret gewählten geometrischen Abmessungen der ganzen Anordnung. Überschreitet die Spannung zwischen einem Paar der drei Leiter P, N und E die Ansprechspannung des ZnO-Materials, so fliesst über das ZnO-Material ein Querstrom, wodurch die Spannung auf dem Ansprechspannungniveau begrenzt wird.

Die Filterschaltungen nach Fig. 1 oder 2 können mit Vorteil in festen Gehäusen eingebaut werden, welche beispielsweise als Zwischenstekker oder Steckdosenvorsatz ausgebildet sind und dadurch einfach in die Netzleitung eines zu schützenden elektrischen Gerätes geschaltet werden können. Die Anordnung nach Fig. 2 kann auch als Gehäusedurchführung der Netzleitung eines elektrischen Gerätes ausgebildet sein.

## Patentansprüche

1. Filterschaltung mit Zinkoxid-Überspan-nungsableitern zum Schutz vor transienten Störungen und Überspannungen, welche in ein aus Phasenleiter (P), Nulleiter (N) und Schutzleiter (E) bestehendes Wechselspannungsnetz geschaltet ist und in welcher mindestens ein Zinkoxid-Überspannungsableiter unterhalb seiner Ansprechspannung als Ersatz für Kapazitäten bis etwa 100 nF eingesetzt ist, dadurch gekennzeichnet,
– dass die Filterschaltung ohmsche und/oder induktive Filterelemente (L7, L8) enthält, welche seriell in den Phasenleiter (P) und den Nulleiter (N) geschaltet und in einem Zinkoxid-Block (7) getrennt voneinander eingebettet sind.

2. Filterschaltung nach Anspruch 1, dadurch gekennzeichnet,
– dass die Zinkoxid-Überspannungsableiter (V3, bis V6) in der Filterschaltung zwischen den Phasenleiter (P) und den Schutzleiter (E) oder zwischen den Nulleiter (N) und den Schutzleiter (E) geschaltet sind.

3. Filterschaltung nach Anspruch 1, dadurch gekennzeichnet,
– dass die Zinkoxid-Überspannungsableiter (V1, V2) in der Filterschaltung zwischen den Phasenleiter (P) und den Nulleiter (N) geschaltet sind.

4. Filterschaltung nach Anspruch 1, dadurch gekennzeichnet,
– dass die Filterschaltung in drei in Serie ge-schaltete Funktionseinheiten (I, II, III) unterglie-dert ist,
– dass in den beiden äusseren Funktionsein-heiten (II, III) jeweils Zinkoxid-Überspannungs-ableiter (V1 bis V6) zwischen Phasenleiter (P) und Nulleiter (N) sowie zwischen diese und den Schutzleiter (E) geschaltet sind und die mittlere Funktionseinheit (I) ein Hochfrequenzfilter enthält.

5. Filterschaltung nach Anspruch 1, dadurch gekennzeichnet,
– dass der Zinkoxid-Block (7) an seiner Oberfläche eine leitende Schicht (12) aufweist, welche mit dem Schutzleiter (E) verbunden ist.

## Revendications

1. Circuit-filtre à parafoudres à oxyde de zinc pour la protection contre des surtensions et perturbations transitoires, qui est connecté dans un secteur alternatif constitué d'un conducteur de phase (P), d'un conducteur neutre (N) et d'un conducteur de protection (E) et dans lequel au moins un parafoudre à oxyde de zinc est utilisé, en dessous de sa tension d'amorçage, comme élément de remplacement pour des capacités allant jusqu'à environ 100 nF, caractérisé en ce que:
– le circuit-filtre contient des éléments filtrants ohmiques ou inductifs (L7, L8) qui sont connectés en série dans le conducteur de phase (P) et le conducteur neutre (N) et sont noyés, séparés l'un de l'autre, dans un bloc d'oxyde de zinc (7).

2. Circuit-filtre suivant la revendication 1, caractérisé en ce que:
– les parafoudres à oxyde de zinc (V3 à V6) sont connectés dans le circuit-filtre entre le conducteur de phase (P) et le conducteur de protection (E) ou entre le conducteur neutre (N) et le conducteur de protection (E).

3. Circuit-filtre suivant la revendication 1, caractérisé en ce que:
– les parafoudres à oxyde de zinc (V1, V2) sont connectés dans le circuit-filtre entre le conduteur de phase (P) et le conducteur neutre (N).

4. Circuit-filtre suivant la revendication 1, caractérisé en ce que:
– il est divisé en trois unités fonctionnelles (I, II, III) connectées en série,
– dans les deux unités fonctionnelles extérieu-res (II, III) des parafoudres à oxyde de zinc (V1 à V6) sont chaque fois connectés entre le conducteur de phase (P) et le conducteur neutre (N) ainsi qu'entre ce conducteur et le conducteur de protection (E) et l'unité fonctionnelle médiane (I) contient un filtre haute fréquence.

5. Circuit-filtre suivant la revendication 1, caractérisé en ce que:
– le bloc d'oxyde de zinc (7) présente, sur sa surface, une couche conductrice (12) qui est connectée au conducteur de protection (E).

## Claims

1. Filter circuit with zinc oxide surge diverters for protection against transient interference and surges, which is connected in an alternating voltage network consisting of phase conductor (P), neutral conductor (N) and protective conductor (E), and in which at least one zinc oxide surge diverter is used below its operating voltage as a substitute for capacitances up to approximately 10 nF, characterized in that
– the filter circuit contains ohmic and/or inductive filter elements (L7, L8), which are connected in series to the pahse conductor (P) and the neutral conductor (N), and are embedded separately from one another in a zinc oxide block (7).

2. Filter circuit according to Claim 1, characterized in that
– the zinc oxide surge diverters (V3 to V6) are connected in the filter circuit between the phase conductor (P) and the protective conductor (E) or between the neutral conductor (N) and the protective conductor (E).

3. Filter circuit according to Claim 1, characterized in that
– the zinc oxide surge diverters (V1, V2) are connected in the filter circuit between the phase conductor (P) and the neutral conductor (N).

4. Filter circuit according to Claim 1, characterized in that
– the filter circuit is subdivided into three functional units (I, II, III) connected in series,
– and in that respectively in the two outer functional units (II, III) zinc oxide surge diverters (V1 to V6) are connected between phase conductor (P) and neutral conductor (N) as well as between these and the protective conductor (E), and the middle functional unit (I) contains a highfrequency filter.

5. Filter circuit according to Claim 1, characterized in that
– on its surface the zinc oxide block (7) has a conductive layer (12), which is connected to the protective conductor (E).

FIG.1

FIG. 2